# EUROPÄISCHE PATENTSCHRIFT

(11) **EP 1 409 301 B1**
(45) Veröffentlichungstag und Bekanntmachung des Hinweises auf die Patenterteilung: **06.04.2005**
(21) Anmeldenummer: 02762228.1
(22) Anmeldetag: 25.07.2002
(51) Int. Cl.: B60R 21/20

(54) **AIRBAGMODUL**
AIRBAG MODULE
MODULE DE COUSSIN GONFLABLE DE SECURITE

(30) Priorität: 25.07.2001 DE 10136893
(43) Veröffentlichungstag der Anmeldung: 21.04.2004
(73) Patentinhaber: Takata-Petri AG, 63743 Aschaffenburg (DE)
(72) Erfinder: MAROTZKE, Thomas, 16562 Bergfelde (DE)
(74) Vertreter: Baumgärtel, Gunnar, Dr.
(86) Internationale Anmeldenummer: PCT/DE2002/002787
(87) Internationale Veröffentlichungsnummer: WO 2003/011655

(56) Entgegenhaltungen:
- DE-A- 19 816 080
- DE-A- 19 917 876
- DE-A- 19 949 481
- DE-U- 29 721 642

## Beschreibung

Die Erfindung betrifft ein Airbagmodul nach dem Oberbegriff des Patentanspruchs 1.

Ein derartiges aus DE 29 721 642 U bekanntes Airbagmodul, das insbesondere als Fahrer-Airbagmodul dienen kann, umfaßt einen Generatorträger, der eine Basis zur Befestigung eines Gasgenerators aufweist, sowie mindestens eine von der Basis abstehende Begrenzungswand, die einstückig an der Basis angeformt ist und zusammen mit der Basis einer Aufnahme für einen durch den Gasgenerator aufblasbaren, gefalteten Gassack bildet.

Ein solches Airbagmodul, bei dem der Generatorträger gleichzeitig eine Aufnahme für den Gassack des Airbagmoduls bildet, läßt aufgrund der hohen Steifigkeit der Gassackaufnahme (entsprechend der besonderen Stabilität des Materials, aus dem ein Generatorträger üblicherweise besteht) ein Zusammenfalten des Gassackes auf ein besonders kleines Packvolumen zu, da die Gassackaufnahme entsprechend große Entspannungskräfte aufnehmen kann. Daher kann das Airbagmodul insgesamt sehr kompakt ausgeführt werden. Dabei besteht jedoch das Problem, daß die Steifigkeit der Gassackaufnahme der Forderung entgegensteht, dem Gassack für eine gute Airbagfunktion beim Entfalten eine möglichst nachgiebige Umgebung zur Verfügung zu stellen.

Der Erfindung liegt das Problem zugrunde, ein Airbagmodul der eingangs genannten Art zu schaffen, dessen Gassackaufnahme einerseits große Entspannungskräfte aufnehmen kann, vorzugsweise ohne sich zu deformieren, und das andererseits eine hinreichend nachgiebige Umgebung für den sich entfaltenden Gassack bildet.

Dieses Problem wird erfindungsgemäß durch die Schaffung eines Airbagmodules mit den Merkmalen des Patentanspruchs 1 gelöst.

Danach ist mindestens ein Abschnitt der Begrenzungswand des Generatorträgers schwenkbar mit der Basis des Generatorträgers verbunden, so daß beim Entfalten des Gassacks durch Verschwenken dieses wandabschnittes ein Freiraum (Öffnung) freigeben wird, durch die hindurch der Gassack beim Entfalten in seitlicher Richtung austreten kann.

Die erfindungsgemäße Lösung hat den Vorteil, daß sie bei einem Airbagmodul, bei dem die Gassackaufnahme durch den Generatorträger selbst gebildet wird und daher entsprechend stabil gestaltet ist, ein anfängliches Entfalten des Gassakkes nicht nur durch eine der Basis gegenüberliegende Austrittsöffnung hindurch sondern auch in seitlicher Richtung gestattet. Dies wird dadurch ermöglicht, daß mindestens ein Abschnitt der seitlichen Begrenzungswand der Gassackaufnahme beim Entfalten des Gassacks derart verschwenkt, daß eine Öffnung zum seitlichen Entfalten des Gassacks freigegeben wird.

Die erfindungsgemäße Erfindung überwindet somit den Widerspruch, einerseits eine möglich steife Gassackaufnahme zur Verfügung zu stellen und andererseits beim Auslösen des Airbagmoduls eine möglichst nachgiebige Umgebung des Gassacks zu gewährleisten.

Üblicherweise ist die der Basis gegenüberliegende Austrittsöffnung der Gassackaufnahme durch eine (aus Kunststoff bestehende) Modulabdeckung abgedeckt, die beim Entfalten des Gassacks die Austrittsöffnung für den sich entfaltenden Gassack freigibt (z.B. durch Verschwenken von Teilen der Modulabdeckung). Erfindungsgemäß wird dabei durch das Verschwenken mindestens eines Abschnitts der seitlichen Begrenzungswand der Gassackaufnahme noch eine zusätzliche Öffnung für ein seitliches Entfalten des Gassacks freigegeben.

Die Modulabdeckung wird vorzugsweise durch eine von der aus Generatorträger und Begrenzungswand bestehenden Aufnahme separaten (also nicht einstückig hieran angeformten) Baugruppe gebildet, die mit der Aufnahme verbunden ist, z.B. stoffschlüssig durch Kleben oder formschlüssig durch Verrasten bzw. Vernieten. Durch die separate Ausbildung der bevorzugt aus einem anderen (weicheren) Material als die Aufnahme, z.B. aus Kunststoff, bestehenden Abdeckung lassen sich die angestrebten Vorteile einer hohen Packungsdichte bei geringen Toleranzen in besonderem Maße erreichen.

Die Austrittsöffnung der Gassackaufnahme definiert eine Hauptentfaltungsrichtung, entlang der der Gassack zu einem Insassen hin entfaltet werden kann, wobei die zusätzliche, durch Verschwenken eines seitlichen Wandabschnittes der Gassackaufnahme entstehende Öffnung außerdem ein (anfängliches) Entfalten eines Teils des Gassacks in seitlicher Richtung, nämlich im wesentlichen senkrecht zur Hauptentfaltungsrichtung, gestattet.

Gemäß einer Ausführungsform der Erfindung wird die Aufnahme für den Gassack durch eine vollständig umlaufende Begrenzungswand zusammen mit der Basis des Generatorträgers gebildet; es handelt sich also um eine topfförmige Aufnahme.

Gemäß einer anderen Ausführungsform der Erfindung umfaßt die Begrenzungswand der Gassackaufnahme mindestens zwei räumlich voneinander beabstandeten Wandbereiche, wodurch z.B. eine im wesentlichen U-förmige Aufnahme für den Gassack gebildet werden kann.

Der schwenkbare Wandabschnitt kann beispielsweise über ein Filmscharnier einstückig mit der Basis des Generatorträgers verbunden sein, wobei das Filmscharnier das Verschwenken des genannten Wandabschnittes beim Entfalten des Gassacks gestattet.

Nach einer anderen Variante ist der schwenkbare Wandabschnitt entlang eines Teils seines der Basis zugewandten Endes (über das dieser Wandabschnitt mit der Basis verbunden ist) durch Schlitze von der Basis getrennt. Durch die Schlitze ist die Verbindung zwischen dem schwenkbaren Wandabschnitt und der Basis geschwächt, so daß ein Verschwenken des genannten Wandabschnittes beim Entfalten des Gassacks ermöglicht wird.

Das Verschwenken eines Wandabschnittes der Gassackaufnahme wird durch die beim Entfalten des Gassacks auftretenden Kräfte ausgelöst, was einerseits durch unmittelbare Einwirkung des Gassacks auf diesen Wandabschnitt oder andererseits durch die sich öffnende Modulabdeckung erfolgen kann. Im letztgenannten Fall ist die Modulabdeckung derart mit dem schwenkbaren Wandabschnitt verbunden, daß sie die gewünschte Schwenkbewegung des Wandabschnittes auslöst, wenn der sich entfaltende Gassack auf die Modulabdeckung einwirkt.

Vorzugsweise ist der Generatorträger (Gassackaufnahme) derart gestaltet, dass der mindestens eine verschwenkbare Wandabschnitt der Gassackaufnahme unter den beim Aufblasen und Entfalten des Gassackes wirkenden Kräften verschwenkt werden kann, während die (kleineren) Entspannungskräfte des gefalteten Gassackes vor dem Auslösen des Airbagmodules eine solche Schwenkbewegung nicht Auslösen können. Hierzu sind Mittel vorgesehen, die einem Verschwenken des mindestens einen schwenkbaren Wandabschnittes entgegenwirken, so daß dieser erst dann eine Schwenkbewegung ausführen kann, wenn beim Aufblasen und Entfalten des in der Gassackaufnahme angeordneten Gassacks hinreichend große Kräfte auf den schwenkbaren Wandabschnitt einwirken.

Gemäß einer ersten Ausführungsform sind die Mittel, die einem Verschwenken des schwenkbaren Wandabschnittes entgegenwirken, einstückig in den Generatorträger integriert.

Hierzu kann beispielsweise vorgesehen sein, daß der schwenkbare Wandabschnitt über einen z.B. durch eine Perforation gebildeten Schwächungsbereich oder einen Überlappungsbereich mit weiteren Bereichen der seitlichen Begrenzungswand verbunden ist.

Nach einer anderen Ausführungsform ist mindestens ein separates Element vorgesehen, das einem Verschwenken des schwenkbaren Wandabschnittes entgegenwirkt. Hierzu kann ein Ring vorgesehen sein, der die Begrenzungswand umgibt und der mindestens einen Schwächungsbereich aufweist, so daß er beim Entfalten des Gassacks aufgeweitet oder zerstört werden kann, um ein Verschwenken des mindestens einen schwenkbaren Wandab- schnitts zu gestatten. In diesem Fall kann der schwenkbare Wandabschnitt einfach durch einen Freiraum, insbesondere durch Schlitze, von den übrigen Bereichen der seitlichen Begrenzungswand getrennt sein. Anstelle eines Ringes kann auch ein geeignetes Verbindungsmittel verwendet werden, das den schwenkbaren Wandabschnitt mit einem weiteren Bereich der seitlichen Begrenzungswand verbindet.

Schließlich kann die Verbindung zwischen der schwenkbaren Begrenzungswand und der Basis der Gassackaufnahme derart gestaltet sein, daß sie ein Verschwenken der Begrenzungswand erst unter Wirkung der Kräfte des sich beim Aufblasen entfaltenden Gassackes zuläßt.

In einer bevorzugten Ausführungsform der Erfindung umfaßt die seitliche Begrenzungswand der Gassackaufnahme zwei einander gegenüberliegend angeordnete schwenkbare Wandabschnitte, die beim Entfalten des Gassacks jeweils eine seitliche Öffnung freigeben.

Weiter Merkmale und Vorteile der Erfindung werden bei der nachfolgenden Beschreibung eines Ausführungsbeispiels anhand der Figuren deutlich werden.

Es zeigen:
- Figur 1a -: einen Schnitt durch ein Airbagmodul mit einem Generatorträger, der zugleich eine Aufnahme für einen Gassack bildet;
- Figur 1b -: das Airbagmodul aus Figur 1A nach einem Auslösen in einem Crash-Fall;
- Figur 2 -: eine erste Ausführungsform eines topfförmigen Generatorträgers für ein Airbagmodul gemäß Figur 1a;
- Figur 3 -: eine zweite Ausführungsform eines topfförmigen Generatorträgers für ein Airbagmodul gemäß Figur 1a;
- Figur 4 -: eine dritte Ausführungsform eines topfförmigen Generatorträgers für ein Airbagmodul gemäß Figur 1a;
- Figur 5 -: eine vierte Ausführungsform eines topfförmigen Generatorträgers für ein Airbagmodul gemäß Figur 1a;
- Figur 6 -: einen im Querschnitt U-förmigen Generatorträger für ein Airbagmodul gemäß Figur 1a.

In Figur 1a ist ein Fahrer-Airbagmodul dargestellt, das einen aus einem stabilen Material, insbesondere aus Metall, bestehenden Generatorträger 1 aufweist, an dessen plattenförmig ausgebildeter Basis 10 ein Gasgenerator 3 über einen Befestigungsflansch 31 mittels Befestigungsschrauben 35 befestigt ist. Die Basis 10 des Generatorträgers 1 dient somit zur Aufnahme und Befestigung des Gasgenerators 3.

Von der plattenförmig ausgebildeten Basis 10 des Generatorträgers 1 steht nach oben eine Begrenzungswand mit zwei einander gegenüberliegenden Wandabschnitten 11, 12 ab. Die im wesentlichen senkrecht von der Basis 10 abstehenden Wandabschnitte 11, 12 bilden zusammen mit der Basis 10 eine topfförmige Aufnahme für einen Gassack 4, der durch den Gasgenerator 3 aufblasbar ist.

Der Gassack 4 ist im Bereich seines Einblasmundes zwischen der Basis 10 des Generatorträgers 1 und dem Generatorflansch 31 eingeklemmt, und der Gasgenerator 3 ist innerhalb des Gassackes 4 angeordnet.

Aufgrund der hohen Stabilität der topfförmigen Gassackaufnahme, die durch die Basis 10 des Generatorträgers 1 zusammen mit den einstückig hieran angeformten Wandabschnitten 11, 12 gebildet wird, kann der Gassack 4 in einem auf ein sehr kleines Packvolumen komprimierten Zustand in der Gassackaufnahme verstaut werden. Dies ist in Figur 1a anhand der sehr engen Packung der einzelnen Lagen des Gassacks in den Bereichen 41, 42 zwischen dem Gehäuse 30 des Gasgenerators 3 und den beiden Wandabschnitten 11, 12 der Gassackaufnahme angedeutet. Aufgrund der hohen Steifigkeit der Gassackaufnahme kann diese die vergleichsweise hohen Entspannungskräfte eines auf ein sehr kleines Packvolumen komprimierten Gassacks 4 aufnehmen.

Ferner ist die steife Ausbildung der Gassackaufnahme vorteilhaft zur Verwendung als Fahrer-Airbagmodul bei Lenkrädern, bei denen die Hupenfunktion durch einen Druck auf die Modulabdeckung ausgelöst werden kann. Hierbei müssen aus Design- und Funktionsgründen hohe Anforderungen an Spaltmaßtoleranzen erfüllt werden. Durch eine steife Ausführung der Gassackaufnahme können dabei Toleranzschwankungen und Verformungen, insbesondere als Folge der Entspannungskräfte des gefalteten Airbags sowie als Folge von Betätigungskräften, minimiert werden.

Wie anhand Figur 1a erkennbar, wird vorliegend eine Modulabdeckung 2 des Airbagmoduls durch eine separate, vorzugsweise aus Kunststoff bestehende Kappe 20 gebildet, die die der Basis 10 gegenüberliegende Austrittsöffnung A der topfförmigen Gassackaufnahme abdeckt. An den seitlichen Enden der Kappe 20 ragen von dieser nach unten Seitenwände 21, 22 ab, die mit jeweils einem Wandabschnitt 11 bzw. 12 der Begrenzungswand des Generatorträgers 1 verbunden sind, z.B. stoffschlüssig durch Kleben oder formschlüssig durch Verrasten bzw. Vernieten. Die Abdeckkappe 20 weist in ihrem Zentrum ferner Schwächungsbereiche 25 auf, entlang derer die Kappe 20 beim Entfalten des Gassacks 4 aufreißen kann, um ein Austreten des sich entfaltenden Gassacks 4 aus dem Airbagmodul zu ermöglichen.

Wird das in Figur 1a dargestellte Airbagmodul durch Zündung des Gasgenerators 3 ausgelöst, so treten durch Ausströmöffnungen 32 in dessen Gehäuse 30 Gase aus, mit denen der Gassack 4 gefüllt wird, so daß er sich aus dem in Figur 1a gezeigten Zustand heraus entfaltet. Hierbei hebt eine auf der Oberseite des Gasgenerators 3 aufliegende Gassacklage 40 in Richtung auf die Kappe 20 nach oben ab. Ferner werden die seitlichen Abschnitte 41, 42 des Gassackpaketes durch die in den Gassack einströmenden Gase nicht nur nach oben in Richtung auf die Kappe 20 sondern auch seitlich nach außen gedrückt.

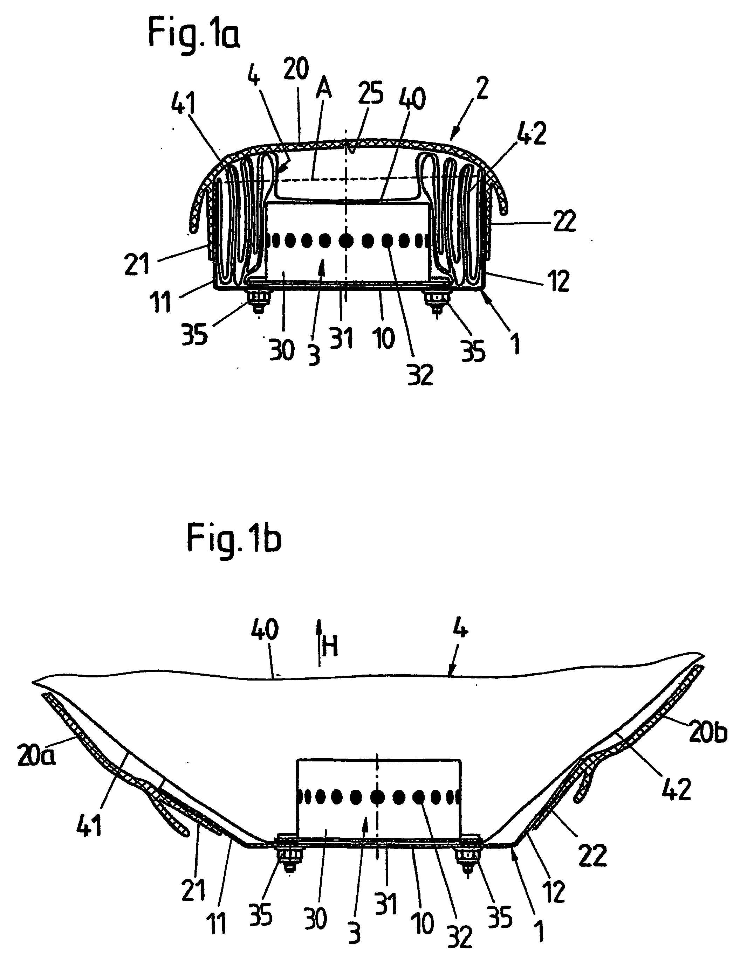

Durch die auf die Kappe 20 wirkenden Kräfte des sich entfaltenden Gassacks 4 reißt diese entlang des Schwächungsbereiches 25 auf und wird getrennt in zwei Kappenabschnitte 20a, 20b, die gemäß Figur 1b unter dem Druck des sich entfaltenden Gassacks 4 nach außen verschwenken. Hierdurch kann der Gassack entlang einer Hauptentfaltungsrichtung H, die durch die der Basis 10 gegenüberliegende Austrittsöffnung A der topfförmigen Gassackaufnahme definiert ist, zu dem zu schützenden Insassen hin entfaltet werden.

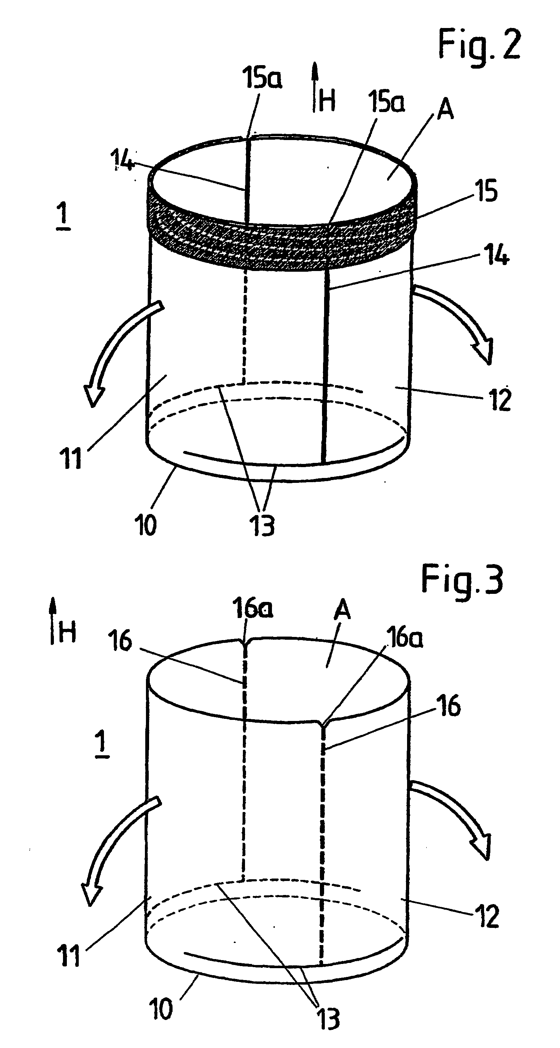

Im vorliegenden Fall wird jedoch nicht nur die obere Austrittsöffnung A durch das Verschwenken der Kappenabschnitte 20a, 20b freigegeben, sondern diese nehmen zugleich die beiden Wandabschnitte 11, 12 der Gassackaufnahme mit. Dies wird dadurch ermöglicht, daß die beiden Wandabschnitte 11, 12 schwenkbar mit der Basis 10 des Generatorträgers 1 verbunden sind, wie nachfolgend anhand der Figuren 2 bis 4 noch im Detail erläutert werden wird.

Hierdurch wird ein Entfalten des Gassacks 4 nicht nur entlang der Hauptentfaltungsrichtung H sondern auch in seitlicher Richtung (im wesentlichen senkrecht zur Hauptentfaltungsrichtung H) ermöglicht. Das heißt, zumindest Teile des Gassacks 4 bewegen sich beim Entfalten anfänglich nicht entlang der Hauptentfaltungsrichtung H sondern hierzu im wesentlichen senkrecht in seitlicher Richtung.

Zusammenfassend ist die durch den Generatorträger 1 gebildete Gassackaufnahme derart gestaltet, daß sie in axialer Richtung entgegen der Hauptentfaltungsrichtung steif ausgebildet ist, wohingegen radial nach außen wirkende Kräfte ein Verschwenken der Wandabschnitte 11, 12 der seitlichen Begrenzungswand der Gassackaufnahme auslösen können. Hierdurch wird die für eine gute Airbagfunktion sowohl im Normalfall (zu schützender Insasse befindet sich in Normalposition) als auch in einem oop-Fall (zu schützender Insasse ist in Richtung auf das Airbagmodul vorgebeugt) angestrebte und vorteilhafte Nachgiebigkeit der Umgebung des Gassacks bei Airbagauslösung erreicht. Gleichzeitig wird eine sehr stabile Gassackaufnahme in Form des Gasgeneratorträgers 1 zu Verfügung gestellt, die ein kleines Packvolumen und entsprechend hohe Entspannungskräfte des komprimierten Gassacks aufnehmen kann.

Figur 2 zeigt ein erstes Ausführungsbeispiel eines topfförmig ausgebildeten Generatorträgers 1, der eine Gassackaufnahme für ein Airbagmodul bildet.

Der Generatorträger 1 weist eine ebene, kreisförmige Basis 10 zur Aufnahme und Befestigung eines Gasgenerators sowie zwei hiervon im wesentlichen senkrecht abstehende Wandabschnitte 11, 12 auf, die eine umlauf ende. Begrenzungswand des Generatorträgers 1 bilden. Die beiden Wandabschnitte 11, 12 sind identisch gestaltet, einander gegenüberliegend angeordnet und durch zwei Schlitze 14 voneinander getrennt. Ferner sind die der Basis 10 zugewandten Endbereiche der Wandabschnitte 11, 12 abschnittsweise durch Schlitze 13 von der Basis 10 getrennt. Hierdurch besteht nur eine abschnittsweise Verbindung zwischen den Wandabschnitten 11, 12 und der Basis 10 des Generatorträgers 1. Dies gestattet beim Entfalten eines in der Gassackaufnahme befindlichen Gassacks ein Verschwenken der beiden Wandabschnitte 11, 12 nach außen, entsprechend den in Figur 2 dargestellten Pfeilen.

Dem Verschwenken der beiden Wandabschnitte 11, 12 des Generatorträgers 1 aufgrund von Entspannungskräften eines Gassackes wirkt ein Ring 15 entgegen, der die beiden Wandabschnitte 11, 12 außen vollständig umschließt. Der Ring 15 ist mit zwei Schwächungsbereichen 15a in Form von Einkerbungen versehen, so daß er beim Wirken großer Kräfte während des Aufblasens und Entfaltens des Gassackes zerstört werden kann, um das Verschwenken der Wandabschnitte 11, 12 nach außen zu ermöglichen.

Da die durch den Generatorträger 1 gebildete Gassackaufnahme einstückig aus dem Material der sehr stabilen Basis 10 des Generatorträgers 1 besteht, bildet sie eine entsprechend steife Aufnahme für einen Gassack. Gleichzeitig bildet sie bei Airbagauslösung eine hinreichend weiche Umgebung des Gassacks, da die beiden seitlichen Wandabschnitte 11, 12 unter der Wirkung der beim Entfalten eines Gassacks auftretenden Kräfte nach außen verschwenken und somit nicht nur ein Entfalten des Gassacks entlang einer Hauptentfaltungsrichtung H durch die der Basis 10 gegenüberliegende Austrittsöffnung A hindurch zulassen sondern außerdem eine Entfaltung von Teilen des Gassacks in seitlicher Richtung nach außen.

Figur 3 zeigt eine Abwandlung des Ausführungsbeispiels gemäß Figur 2, wobei der Unterschied darin besteht, daß die beiden Wandabschnitte 11, 12 des Generatorträgers 1 nicht durch Schlitze sondern durch Perforationslinien 16 voneinander getrennt sind. In diesem Fall ist die Verwendung eines zusätzlichen Rings (wie bei dem Ausführungsbeispiel gemäß Figur 2 vorgesehen) zur Stabilisierung der Gassackaufnahme in radialer Richtung nicht erforderlich. Vielmehr sind die Perforationen 16 so ausgelegt, daß sie nicht durch den aufgrund der Entspannungskräfte des gefalteten Gassacks wirkenden Druck sondern lediglich durch die beim Befüllen und Entfalten des Gassacks auftretenden wesentlich höheren Druckkräfte aufreißen können. Um ein definiertes Aufreißen der Perforationen 16 beim Entfalten eines Gassacks sicherzustellen, münden die Perforationen 16 an ihrem der Basis 10 abgewandten Ende jeweils in Einkerbungen 16a.

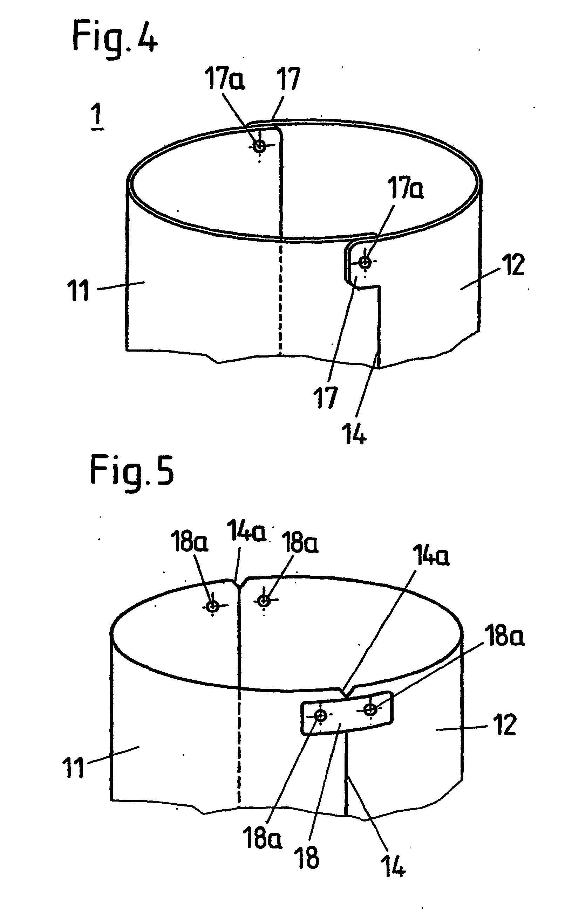

In Figur 4 ist eine Abwandlung des in den Figuren 2 und 3 gezeigten Generatorträgers 1 dargestellt, bei der zwei Überlappungsbereiche 17 vorgesehen sind, die jeweils als Laschen an dem einen schwenkbaren Wandabschnitt 12 einstükkig angeformt sind. In den Überlappungsbereichen 17 sind die beiden Wandabschnitte 11, 12 jweils durch ein Befestigungsmittel 17a miteinander verbunden.

Hierbei sind die Überlappungsbereiche 17 und/oder die Befestigungsmittel 17a so ausgelegt, daß sie den Entspannungskräften eines in der durch den Generatorträger 10 gebildeten Gassackaufnahme angeordneten, gefalteten Gassackes standhalten, jedoch nicht den beim Entfalten des Gassackes (nach Auslösung des Airbagmodules) auftretenden Kräften. Durch letztere wird die Verbindung zwischen dem Überlappungsbereich 17 des einen schwenkbaren Wandabschnittes 12 und dem anderen schwenkbaren Wandabschnitt 11 gelöst, z.B. durch Abscheren, Herausreißen, Ausrasten oder Zerstören des Befestigungsmittels 17a oder durch Zerstörung des laschenartigen Überlappungsbereiches 17.

Die Befestigungsmittel 17a können hierbei sowohl durch separate Verbindungselemente, z.B. in Form von Stiften oder Schrauben, als auch durch an den Wandabschnitten 11, 12 angeformte Verbindungselemente, z.B in Form von Rastelementen oder Haken gebildet werden.

Bei dem Ausführungsbeispiel eines topfförmigen Generatorträgers gemäß Figur 5 sind die beiden schwenkbaren Wandabschnitte 11, 12 über separate Verbindungsstege bzw. -laschen 18 miteinander verbunden, die wiederum an den schwenkbaren Wandabschnitten 11, 12 durch geeignete Befestigungsmittel 18a befestigt sind. Als Befestigungsmittel eignen sich hierbei z.B die Verbindungselemente, die bereits anhand Figur 4 erwähnt wurden. Auch hier ist die Verbindung zwischen den beiden schwenkbaren Wandabschnitten 11, 12 so ausgelegt, daß sie zwar den Entspannungskräften eines gefalteten Gassackes nicht aber den beim Entfalten auftretenden Kräften standhalten kann. Um unter der Wirkung der letztgenannten Kräfte das Verschwenken der beiden Wandabschnitte 11, 12 zu erleichtern, mündet der Schlitz 14 zwischen den beiden Wandabschnitten 11, 12 am oberen Ende des topfförmigen Generatorträgers 1 jeweils in eine trichterartige Erweiterung 14a. Das Lösen der Verbindung zwischen den beiden Wandabschnitten 11, 12 kann auf den gleichen Ursachen beruhen, wie anhand Figur 4 für den Überlappungsbereich 17 dargelegt.

Ferner kann auch der Verbindungssteg 18a selbst eine Einkerbung oder einen sonstigen Schwächungsbereich aufweisen, um eine Zerstörung des Verbindungssteges 18a unter der Wirkung der beim Entfalten eines Gassackes auftretenden Kräfte einzuleiten.

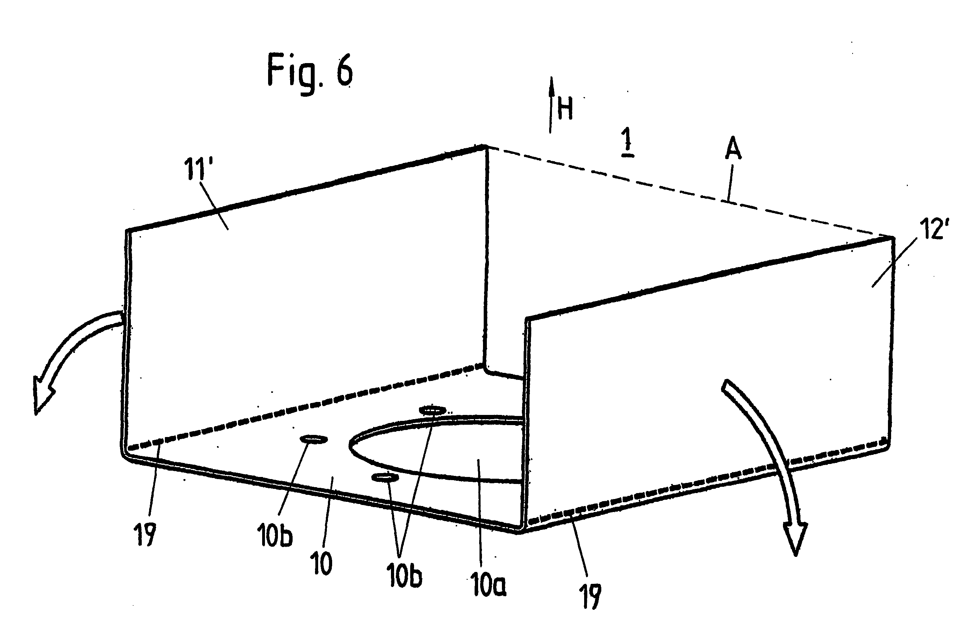

Figur 6 zeigt ein weiteres Ausführungsbeispiel einer Gassackaufnahme, die durch einen Generatorträger 1 gebildet wird.

Gemäß Figur 6 ist die Basis 10 des Generatorträgers 1 rechteckförmig ausgebildet und weist eine Aufnahmeöffnung 10a sowie Befestigungsstellen 10b zur Aufnahme und Befestigung eines Rundgasgenerators auf. An der Basis 10 sind einstückig zwei senkrecht von der Basis 10 abstehende und ebenfalls rechteckförmig ausgebildete Wandabschnitte 11', 12' ausgebildet, die eine seitliche Begrenzungswand des Generatorträgers 1 bilden. Die beiden Wandabschnitte 11', 12' sind dabei über jeweils ein Scharnier, insbesondere Filmscharnier 19, mit der Basis 10 verbunden und einander gegenüberliegend angeordnet, so daß der Generatorträger 1 im Querschnitt im wesentlichen U-förmig gestaltet ist. Das Filmscharnier 19 ist dabei derart ausgebildet, daß es ein Verschwenken der Wandabschnitte 11', 12' erst beim Einwirken hinreichend großer Kräfte, wie sie beim Aufblasen und Entfalten eines Gassacks auftreten, gestattet.

Anstelle eines Fimscharniers 19 kann auch ein sonstiger Schwächungsbereich, z.B. eine perforierter Bereich vorgesehen sein. Weiterhin können auch bei diesem Ausführungsbeispiel die schwenkbaren Wandabschnitte 11', 12' durch einen umlaufenden Ring oder Verbindungsstege miteinander in Verbindung stehen.

Der Generatorträger 1 bildet somit eine im wesentlichen U-förmige Aufnahme für einen Gassack, die beim Aufblasen des Gassacks nicht nur eine Entfaltung entlang einer Hauptentfaltungsrichtung H (durch eine der Basis 10 gegenüberliegende Öffnung A hindurch) sondern auch eine hierzu im wesentlichen senkrechte Entfaltung von Teilen des Gassacks in seitlicher Richtung zuläßt. Hierzu können die beiden Wandabschnitte 11', 12' durch den Druck des sich entfaltenden Gassacks nach außen verschwenkt werden, entsprechend den in Figur 6 dargestellten Pfeilen.

## Patentansprüche

1. Airbagmodul mit
- einem Generatorträger, der eine Basis zur Befestigung eines Gasgenerators aufweist,
- mindestens einer von dem Basisteil abstehenden Begrenzungswand, die einstückig an der Basis angeformt ist und die zusammen mit der Basis eine Aufnahme für einen durch den Gasgenerator aufblasbaren, zusammengefalteten Gassack bildet, und
- einer Modulabdeckung zur Abdeckung einer Austrittsöffnung für einen sich entfaltenden Gassack,
wobei mindestens ein Abschnitt (11, 12; 11', 12') der Begrenzungswand schwenkbar mit dem Basisteil (10) verbunden ist und durch Verschwenken einen Freiraum für den sich entfaltenden Gassack (4) freigibt,
**dadurch gekennzeichnet,**
**dass** die Modulabdeckung (2) durch eine separate Kappe (20) gebildet wird, die mit dem mindestens einen Abschnitt (11, 12; 11', 12') der Begrenzungswand verbunden ist.

2. Airbagmodul nach Anspruch 1, **dadurch gekennzeichnet, daß** die Aufnahme für den Gassack (4) eine Austrittsöffnung (A) für den sich entfaltenden Gassack (4) aufweist und daß eine Modulabdeckung (2) zur Abdeckung der Austrittsöffnung (A) vorgesehen ist, wobei die Modulabdeckung (2) vorzugsweise durch eine separate, mit der Aufnahme verbundene Baugruppe gebildet wird.

3. Airbagmodul nach Anspruch 2, **dadurch gekennzeichnet, daß** die Abdeckung (2) beim Entfalten eines Gassacks (4) die Austrittsöffnung (A) für den sich entfaltenden Gassack (4) freigibt und daß durch ein Verschwenken des mindestens einen schwenkbaren Wandabschnittes (11, 12; 11', 12') ein zusätzlicher Freiraum für den sich entfaltenden Gassack (4) freigegeben wird.

4. Airbagmodul nach Anspruch 3, **dadurch gekennzeichnet, daß** die dem Basisteil (10) gegenüberliegende Öffnung (A) eine Hauptentfaltungsrichtung (H) des Gassacks (4) definiert und daß der zusätzliche Freiraum eine Entfaltung von Teilen des Gassacks (4) im wesentlichen senkrecht zu dieser Hauptentfaltungsrichtung (H) gestattet.

5. Airbagmodul nach einem der vorhergehenden Ansprüche, **dadurch gekennzeichnet, daß** die Aufnahme für den Gassack (4) eine vollständig umlaufende Begrenzungswand (11, 12) aufweist.

6. Airbagmodul nach einem der vorhergehenden Ansprüche, **dadurch gekennzeichnet, daß** die Aufnahme topfförmig ausgebildet ist.

7. Airbagmodul nach einem der Ansprüche 1 bis 4, **dadurch gekennzeichnet, daß** die Begrenzungswand mindestens zwei räumlich voneinander beabstandete Wandbereiche (11', 12') umfaßt.

8. Airbagmodul nach Anspruch 7, **dadurch gekennzeichnet, daß** die Aufnahme im wesentlichen U-förmig ausgebildet ist.

9. Airbagmodul nach einem der vorhergehenden Ansprüche, **dadurch gekennzeichnet, daß** der schwenkbare Wandabschnitt (11', 12') über ein Filmscharnier (17) an der Basis (10) angelenkt ist.

10. Airbagmodul nach einem der vorhergehenden Ansprüche, **dadurch gekennzeichnet, daß** der schwenkbare Wandabschnitt (11, 12) entlang eines Teils seines der Basis (10) zugewandten Endes durch einen Schlitz (13) oder eine Perforation von der Basis (10) getrennt ist.

11. Airbagmodul nach einem der vorhergehenden Ansprüche, **dadurch gekennzeichnet, daß** der schwenkbare Wandabschnitt (11, 12; 11', 12') durch beim Entfalten des Gassacks (4) auftretende Kräfte verschwenkbar ist.

12. Airbagmodul nach Anspruch 11, **dadurch gekennzeichnet, daß** der schwenkbare Wandabschnitt (11, 12; 11', 12') unmittelbar durch den sich entfaltenden Gassack (4) verschwenkt wird.

13. Airbagmodul nach Anspruch 2 und Anspruch 11 oder 12, **dadurch gekennzeichnet, daß** der schwenkbare Wandabschnitt (11, 12; 11', 12') durch die sich beim Entfalten des Gassackes (4) öffnende Abdeckung (2) verschwenkbar ist.

14. Airbagmodul nach einem der vorhergehenden Ansprüche, **dadurch gekennzeichnet, daß** Mittel (15, 16, 17, 18, 19) vorgesehen sind, die einem Verschwenken des Wandabschnittes (11, 12; 11', 12') entgegenwirken.

15. Airbagmodul nach Anspruch 14, **dadurch gekennzeichnet, daß** die Mittel (15, 16, 17, 18, 19) zur Koppelung des schwenkbaren Wandabschnittes (11, 12; 11', 12') mit weiteren Bereichen der Aufnahme, insbesondere weiteren Wandbereichen in Verbindung stehen.

16. Airbagmodul nach Anspruch 14 oder 15, **dadurch gekennzeichnet, daß** die Mittel (16, 17, 19) einstückig in die Begrenzungswand (11, 12; 11', 12') integriert sind.

17. Airbagmodul nach Anspruch 16, **dadurch gekennzeichnet, daß** der schwenkbare Wandabschnitt (11, 12) über einen Schwächungsbereich (16, 17), insbesondere einen perforierten Bereich oder einen Überlappungsbereich, mit weiteren Wandbereichen verbunden ist.

18. Airbagmodul nach Anspruch 14 oder 15, **dadurch gekennzeichnet, daß** mindestens ein zusätzliches Element (15, 18) vorgesehen ist, das einem Verschwenken des Wandabschnittes (11, 12; 11', 12') entgegenwirkt.

19. Airbagmodul nach Anspruch 18, **dadurch gekennzeichnet, daß** ein Ring (15) vorgesehen ist, der die Begrenzungswand umgibt.

20. Airbagmodul nach Anspruch 18, **dadurch gekennzeichnet, daß** ein Verbindungselement (18) vorgesehen ist, das den schwenkbaren Wandabschnitt mit weiteren Bereichen der Aufnahme, insbesondere weiteren Wandbereichen, verbindet.

21. Airbagmodul nach einem der Ansprüche 18 bis 20, **dadurch gekennzeichnet, daß** der Ring (15) mindestens einen Schwächungsbereich (15a) aufweist, so daß er beim Entfalten des Gassacks (4) aufgeweitet oder zerstört werden kann, um ein Verschwenken des schwenkbaren Wandabschnittes (11, 12) zu gestatten.

22. Airbagmodul nach einem der vorhergehenden Ansprüche, **dadurch gekennzeichnet, daß** der schwenkbare Wandabschnitt (11, 12; 11', 12') durch einen Freiraum, insbesondere durch einen Schlitz (14), von weiteren Wandbereichen getrennt ist.

23. Airbagmodul nach einem der vorhergehenden Ansprüche, **dadurch gekennzeichnet, daß** zwei schwenkbare Wandabschnitte (11, 12; 11', 12') vorgesehen sind.

24. Airbagmodul nach Anspruch 23, **dadurch gekennzeichnet, daß** die beiden Wandabschnitte (11, 12; 11', 12') einander gegenüberliegend angeordnet sind.

## Claims

1. An airbag module, with
- a generator carrier which has a base for fastening a gas generator,
- at least one boundary wall which projects from the base part and is integrally formed in one piece on the base and which, together with the base, forms a receptacle for a folded-together gas bag inflatable by means of the gas generator, and
- a module cover for covering an outlet orifice for a deploying gas bag,
at least one portion (11, 12; 11', 12') of the boundary wall being connected pivotably to the base part (10) and, as a result of pivoting, releasing a free space for the deploying gas bag (4),
**characterized**
**in that** the module cover (2) is formed by a separate cap (20) which is connected to the at least one portion (11, 12; 11', 12') of the boundary wall.

2. The airbag module as claimed in claim 1,
**characterized**
**in that** the receptacle for the gas bag (4) has an outlet orifice (A) for the deploying gas bag (4), and in that a module cover (2) for covering the outlet orifice (A) is provided, the module cover (2) being formed preferably by a separate subassembly connected to the receptacle.

3. The airbag module as claimed in claim 2,
**characterized**
**in that**, during the deployment of a gas bag (4), the cover (2) releases the outlet orifice (A) for the deploying gas bag (4), and in that, as a result of a pivoting of the at least one pivotable wall portion (11, 12; 11', 12'), an additional free space for the deploying gas bag (4) is released.

4. The airbag module as claimed in claim 3,
**characterized**
**in that** the orifice (A) located opposite the base part (10) defines a main deployment direction (H) of the gas bag (4), and in that the additional free space allows a deployment of parts of the gas bag (4) essentially perpendicularly to this main deployment direction (H).

5. The airbag module as claimed in one of the preceding claims,
**characterized**
**in that** the receptacle for the gas bag (4) has a completely continuous boundary wall (11, 12).

6. The airbag module as claimed in one of the preceding claims,
**characterized**
**in that** the receptacle has a bowl-shaped design.

7. The airbag module as claimed in one of claims 1 to 4,
**characterized**
**in that** the boundary wall comprises at least two wall regions (11', 12') spaced apart from one another three-dimensionally.

8. The airbag module as claimed in claim 7,
**characterized**
**in that** the receptacle is of essentially U-shaped design.

9. The airbag module as claimed in one of the preceding claims,
**characterized**
**in that** the pivotable wall portion (11', 12') is articulated on the base (10) via a film hinge (17).

10. The airbag module as claimed in one of the preceding claims,
**characterized**
**in that** the pivotable wall portion (11, 12) is separated, along part of its end facing the base (10), from the base (10) by a slot (13) or a perforation.

11. The airbag module as claimed in one of the preceding claims,
**characterized**
**in that** the pivotable wall portion (11, 12; 11', 12') is pivotable by means of forces occurring during the deployment of the gas bag (4).

12. The airbag module as claimed in claim 11,
**characterized**
**in that** the pivotable wall portion (11, 12; 11', 12') is pivoted directly by the deploying gas bag (4).

13. The airbag module as claimed in claim 2 and claim 11 or 12,
**characterized**
**in that** the pivotable wall portion (11, 12; 11', 12') is pivotable by means of the cover (2) opening during the deployment of the gas bag (4).

14. The airbag module as claimed in one of the preceding claims,
**characterized**
**in that** means (15, 16, 17, 18, 19) are provided which counteract a pivoting of the wall portion (11, 12; 11', 12').

15. The airbag module as claimed in claim 14,
**characterized**
**in that** the means (15, 16, 17, 18, 19) for coupling the pivotable wall portion (11, 12; 11', 12') are connected to further regions of the receptacle, in particular further wall regions.

16. The airbag module as claimed in claim 14 or 15,
**characterized**
**in that** the means (16, 17, 19) are integrated in one piece into the boundary wall (11, 12; 11', 12').

17. The airbag module as claimed in claim 16,
**characterized**
**in that** the pivotable wall portion (11, 12) is connected to further wall regions via a weakening region (16, 17), in particular a perforated region or an overlap region.

18. The airbag module as claimed in claim 14 or 15,
**characterized**
**in that** at least one additional element (15, 18) is provided, which counteracts a pivoting of the wall portion (11, 12; 11', 12').

19. The airbag module as claimed in claim 18,
**characterized**
**in that** a ring (15) is provided which surrounds the boundary wall.

20. The airbag module as claimed in claim 18,
**characterized**
**in that** a connection element (18) is provided which connects the pivotable wall portion to further regions of the receptacle, in particular further wall regions.

21. The airbag module as claimed in one of claims 18 to 20,
**characterized**
**in that** the ring (15) has at least one weakening region (15a), so that it can be widened or destroyed during the deployment of the gas bag (4), in order to allow a pivoting of the pivotable wall portion (11, 12).

22. The airbag module as claimed in one of the preceding claims,
**characterized**
**in that** the pivotable wall portion (11, 12; 11', 12') is separated from further wall regions by a free space, in particular by a slot (14).

23. The airbag module as claimed in one of the preceding claims,
**characterized**
**in that** two pivotable wall portions (11, 12; 11', 12') are provided.

24. The airbag module as claimed in claim 23,
**characterized**
**in that** the two wall portions (11, 12;, 11', 12') are arranged opposite one another.

## Revendications

1. Module d'airbag, comportant
- un support de générateur, qui comporte une base pour la fixation d'un générateur de gaz,
- au moins une paroi limite, qui fait saillie à partir de la partie de base, est formée d'un seul tenant sur la base et forme, conjointement avec la base, un logement pour un sac gonflable replié, qui peut être gonflé par le générateur de gaz, et
- un revêtement du module pour recouvrir une ouverture de sortie pour un sac gonflable déplié,
dans lequel au moins une section (11, 12; 11', 12') de la paroi limite est reliée de manière à pouvoir pivoter à la partie de base (10) et libère, par pivotement, un espace libre pour le sac gonflable (4) qui se déplie,
**caractérisé en ce que** le revêtement du module (2) est formé par un capuchon séparé (20), qui est relié à au moins une section (11, 12; 11', 12') de la paroi limite.

2. Module d'airbag selon la revendication 1, **caractérisé en ce que** le logement pour le sac gonflable (4) comporte une ouverture de sortie (A) pour le sac gonflable (4) qui se déplie, et qu'un revêtement (2) du module est prévu pour recouvrir l'ouverture de sortie (A), le revêtement (2) du module étant formé de préférence par un module séparé relié au logement.

3. Module d'airbag selon la revendication 2, **caractérisé en ce que** lors du dépliage du sac gonflable (4), le revêtement (2) libère l'ouverture de sortie (A) pour le sac gonflable (4) qui se déplie, et que sous l'effet d'un pivotement de la au moins une section de paroi pivotante (11, 12; 11', 12'), un espace libre supplémentaire est libéré pour le sac gonflable (4) qui se déplie.

4. Module d'airbag selon la revendication 3, **caractérisé en ce que** l'ouverture (A), qui est située à l'opposé de la partie de base (10), définit une direction de dépliage principale (H) du sac gonflable (4) et que l'espace libre supplémentaire permet un dépliage de parties du sac gonflable (4) sensiblement perpendiculairement à cette direction de dépliage principale (H).

5. Module d'airbag selon l'une des revendications précédentes, **caractérisé en ce que** le logement pour le sac gonflable (4) comporte une paroi limite totalement enveloppante (11, 12).

6. Module d'airbag selon l'une des revendications précédentes, **caractérisé en ce que** le logement est agencé avec une forme de pot.

7. Module d'airbag selon l'une des revendications 1 à 4, **caractérisé en ce que** la paroi limite comprend au moins des éléments de paroi (11', 12') qui sont distants spatialement les uns des autres.

8. Module d'airbag selon la revendication 7, **caractérisé en ce que** le logement est agencé essentiellement en forme de U.

9. Module d'airbag selon l'une des revendications précédentes, **caractérisé en ce que** l'élément de paroi pivotant (11', 12') est articulé sur la base (10) à l'aide d'une charnière (17) formée d'un film.

10. Module d'airbag selon l'une des revendications précédentes, **caractérisé en ce que** la section de paroi pivotante (11, 12) est séparée de la base (10), le long d'une partie de son extrémité tournée vers la base (10), par une fente (13) ou par une perforation.

11. Module d'airbag selon l'une des revendications précédentes, **caractérisé en ce que** la section de paroi pivotante (11, 12; 11', 12') peut pivoter sous l'action de forces qui apparaissent lors du dépliage du sac gonflable (4).

12. Module d'airbag selon la revendication 11, **caractérisé en ce que** la section de paroi pivotante (11, 12; 11', 12) est amenée directement à pivoter au moyen du sac gonflable (4) qui se déplie.

13. Module d'airbag selon la revendication 2 et la revendication 11 ou 12, **caractérisé en ce que** la section de paroi pivotante (11, 12; 11', 12') peut pivoter sous l'action du revêtement (2) qui s'ouvre lors du dépliage du sac à gaz.

14. Module d'airbag selon l'une des revendications précédentes, **caractérisé en ce qu'**il est prévu des moyens (15, 16, 17, 18, 19), qui s'opposent à un pivotement de la section de paroi (11, 12; 12', 12").

15. Module d'airbag selon la revendication 14, **caractérisé en ce que** les moyens (15, 16, 17, 18, 19) sont reliés, pour le couplage de la section de paroi pivotante (11, 12; 11', 12'), à d'autres parties du logement, notamment à d'autres éléments de paroi.

16. Module d'airbag selon la revendication 14 ou 15, **caractérisé en ce que** les moyens (16, 17, 19) sont intégrés d'un seul tenant dans la paroi limite (11, 12; 11', 12').

17. Module d'airbag selon la revendication 16, **caractérisé en ce que** la section de paroi pivotante (11, 12) est reliée par l'intermédiaire d'une zone d'affaiblissement (16, 17), notamment d'une zone perforée ou d'une zone de chevauchement, aux autres éléments de paroi.

18. Module d'airbag selon la revendication 14 ou 15, **caractérisé en ce qu'**il est prévu au moins un élément supplémentaire (15, 18), qui s'oppose à un pivotement de la section de paroi (11, 12; 11', 12).

19. Module d'airbag selon la revendication 18, **caractérisé en ce qu'**il est prévu un anneau (15), qui entoure la paroi limite.

20. Module d'airbag selon la revendication 18, **caractérisé en ce qu'**il est prévu un élément de liaison (18) qui relie la section de paroi pivotante à d'autres parties du logement, notamment à d'autres éléments de paroi.

21. Module d'airbag selon l'une des revendications 18 à 20, **caractérisé en ce que** l'anneau (15) comporte au moins une zone d'affaiblissement (15a) de telle sorte que lors du dépliage du sac gonflable (4), il peut s'élargir ou se détruire pour permettre un pivotement de la section de paroi pivotante (11, 12).

22. Module d'airbag selon l'une des revendications précédentes, **caractérisé en ce que** la section de paroi pivotante (11, 12; 11', 12') est séparée d'autres éléments de paroi par un espace libre, notamment par une fente (14).

23. Module d'airbag selon l'une des revendications précédentes, **caractérisé en ce que** deux sections de paroi pivotantes (11, 12; 11', 12') sont prévues.

24. Module d'airbag selon la revendication 23, **caractérisé en ce que** les deux sections de paroi (11, 12; 11', 12') sont disposées en vis-à-vis l'une de l'autre.
